(19) Europäisches Patentamt / European Patent Office / Office européen des brevets

(11) **EP 2 096 468 A1**

(12) **EUROPEAN PATENT APPLICATION**

(43) Date of publication:
**02.09.2009 Bulletin 2009/36**

(51) Int Cl.:
***G01V 3/32*** *(2006.01)*

(21) Application number: **08003559.5**

(22) Date of filing: **27.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **ExxonMobil Upstream Research Company**
**Houston, TX 77098-2189 (US)**

(72) Inventor: **The designation of the inventor has not yet been filed**

(74) Representative: **Pols, Ronald Maarten et al**
**ExxonMobil Chemical Europe Inc.,**
**PO Box 105**
**1830 Machelen (BE)**

(54) **Non-destructive determination of the pore size distribution and the distribution of fluid flow velocities**

(57)    A method is disclosed for the non-destructive determination of the pore size distribution and the distribution of fluid flow velocities using NMR spin echo signal measurements. In one embodiment, the invention involves simultaneously injecting acoustic energy (**208**), generating a magnetic field having a gradient, and injecting radio-frequency electromagnetic energy (**206**) into a subsurface region, using for example an NMR tool and a well logging tool having an acoustic transmitter placed in a wellbore (**202**). The spin echo signal generated in the subsurface region is measured (**210**) by the NMR tool for at least two values (**212**) of the magnetic field gradient. A relationship is provided by which the pore fluid velocity distribution may be calculated (**214**) from the inverse Fourier transform of the spin echo data. The pore size distribution may then be calculated from the pore fluid velocity distribution.

FIG. 2

## Description

## BACKGROUND OF THE INVENTION

One of the major objectives of open hole logging in hydrocarbon exploration wells is to evaluate the fluid and fluid flow properties of the reservoir. Properties of particular interest include the relative fluid saturation at a given capillary pressure, the fluid flow permeabilities, and the fluid viscosities. These fluid flow properties are required to assess the economics of the reserve and for field development planning, such as the number of wells, well spacing, surface facilities, pipeline facilities, etc, which will be needed for production.

At present, these reservoir fluid flow parameters are determined using a variety of different approaches, including well flow testing, formation micro-test, coring and core analysis, and inference from continuous wireline well logging measurements. Each method is a trade-off between the cost of the measurement and the accuracy and associated uncertainties in the data and analysis. One of the advantages of continuous wireline logging is that it provides continuous data over the large reservoir intervals at much lower cost. The major disadvantage of current wireline logging measurements is that the fluid flow properties of the reservoir rock are inferred from measurements on non-flowing fluids, rather than measured directly on fluid flowing in the rock.

The fluid flow permeability, $\kappa$, is defined by Darcy's law:

$$\cdot v = -\left(\kappa/\eta\right)\nabla P$$

where $v$ is the flow velocity, $\Delta P$ is the pressure gradient and $\kappa/\eta$, is the ratio of permeability to viscosity. The latter is also known as the fluid mobility. Typically, the direct measurement of permeability is obtained by laboratory core analysis. In these laboratory measurements, the viscosity of the fluid and pressure gradient are known and the velocity is measured. The permeability is then readily derived from data fitting using the Darcy law definition of permeability.

## SUMMARY OF THE INVENTION

In one general aspect, a method of determining material properties within a portion of a subterranean formation includes a) injecting acoustic energy into the portion of the formation; b) generating a magnetic field gradient within the portion of the formation; c) injecting a radio frequency energy into the portion of the formation; wherein the acoustic energy, the magnetic field gradient, and radio frequency energy have a predetermined relationship in time; d) measuring an NMR signal from the portion of the formation; e) repeating a), b), c), and d) for one or more different values of the magnetic field gradient; and f) processing the measured NMR signals to determine one or more of the material properties of the portion of the subterranean formation.

Implementations of this aspect may include one or more of the following features. For example, the measured NMR signal detected may include a spin echo. The magnetic field gradient may be variable, vary with time, vary with spatial location, and/or vary as a function of the desired resolution of the material properties. The material properties may include a pore fluid velocity distribution. The material properties may include an average pore fluid velocity. A relative pore size distribution may be determined from the pore fluid velocity distribution. An absolute pore size distribution may be determined from the pore fluid velocity distribution and the mean pore size. A Fourier inversion of the measured NMR signal may be determined to determine one or more of the material properties of the formation. The acoustic energy may include a periodic acoustic signal. The periodic acoustic signal, the magnetic field gradient, and/or the radio frequency energy may include a plurality of operating frequencies. A direction of the magnetic field gradient is substantially the same as a direction of propagation of the acoustic energy. The spatial direction of the magnetic field gradient may not be the same as the direction of the propagating wave of the acoustic energy. The predetermined relationship in time is that the acoustic energy, the magnetic field gradient, and radio frequency energy occur simultaneously at each measurement location. The material properties include fluid flow properties, and further comprising using the fluid flow properties to assess the economics of the subterranean formation or for planning development of hydrocarbon production from the subterranean formation.

In another general aspect, a method of obtaining measurements that are representative of one or more material properties within a portion of a subterranean formation includes a) injecting acoustic energy into the portion of the formation; b) generating a magnetic field gradient within the portion of the formation; c) injecting a radio frequency energy into the portion of the formation; wherein the acoustic energy, the magnetic field gradient, and radio frequency energy have a predetermined relationship in time; d) measuring an NMR signal from the portion of the formation; and e) repeating a), b), c), and d) for one or more different values of the magnetic field gradient.

Implementations of this aspect may include one or more of the following features. For example, the material properties may include a pore fluid velocity distribution. Material properties include pore fluid velocity distribution and pore size distribution, from which many other petrophysical properties of the rock are derived. In one embodiment, the pore fluid velocity distribution is determined by performing an inverse Fourier transform of a measured NMR spin echo signal.

In another general aspect, a method of determining material properties within a portion of a subterranean formation includes processing NMR signals to determine one or more of the material properties of the portion of the subterranean formation,; wherein the NMR signals were measured by a process comprising: a) injecting acoustic energy into the portion of the formation; b) generating a magnetic field gradient within the portion of the formation; c) injecting a radio frequency energy into the portion of the formation; wherein the acoustic energy, the magnetic field gradient, and radio frequency energy have a predetermined relationship in time; d) measuring an NMR signal from the portion of the formation; and e) repeating a), b), c), and d) for one or more different values of the magnetic field gradient.

Implementations of this aspect may include one or more of the following features. For example, the material properties may include a pore fluid velocity distribution; and processing NMR signals to determine one or more of the material properties of the portion of the subterranean formation may include performing a Fourier inversion of the measured NMR signal to determine one or more of the material properties of the formation.

In another general aspect, a method of producing hydrocarbons from a subterranean formation includes a) injecting acoustic energy into the portion of the formation;

b) generating a magnetic field gradient within the portion of the formation; c) injecting a radio frequency energy into the portion of the formation; wherein the acoustic energy, the magnetic field gradient, and radio frequency energy have a predetermined relationship in time; d) measuring an NMR signal from the portion, of the formation; e) repeating a), b), c), and d) for one or more different values of the magnetic field gradient; f) processing the measured NMR signals to determine one or more of the material properties of the subterranean formation; and g) producing hydrocarbons from the subterranean formation as a function of the determined material properties of the formation.

Implementations of this aspect may include one or more of the following features. For example, the material properties may include a pore fluid velocity distribution; and a Fourier inversion of the measured NMR signals may be performed to determine one or more of the material properties of the formation. The predetermined relationship in time is that the acoustic energy, the magnetic field gradient, and radio frequency energy occur simultaneously at each measurement location. The material properties include fluid flow properties, and the fluid flow properties are used to assess the economics of the subterranean formation or for planning development of hydrocarbon production from the subterranean formation.

Material properties include pore fluid velocity distribution and pore size distribution, from which many other petrophysical properties of the rock are derived. In one embodiment, the pore fluid velocity distribution is determined by performing an inverse Fourier transform of a measured NMR spin echo signal.

## BRIEF DESCRIPTION OF THE DRAWINGS

Fig. 1 illustrates a fragmentary cross-sectional illustration of an exemplary embodiment of a logging tool positioned within a wellbore that traverses a subterranean formation.

Fig. 2 is a flow chart representations of an exemplary embodiment of a method for determining the pore fluid velocity distribution, pore fluid average velocity, pore size distribution, and average pore size.

Fig. 3A illustrates an exemplary embodiment of the operation of the logging tool of Fig. 1.

Fig. 3B illustrates an exemplary embodiment of a portion of the surrounding formation during the operation of the logging tool of Fig. 1.

Fig. 3C is a graphical timing diagram illustrating and exemplary embodiment of the operation of the logging tool of Fig. 1.

Fig. 4 is a graphical illustration of an exemplary embodiment of the determination of the pore fluid velocity distribution.

Fig. 5 is a graphical illustration of an exemplary embodiment of the determination of the pore size distribution.

Fig. 6 is a graphical timing diagram illustrating and exemplary embodiment of the operation of the logging tool of Fig. 1.

## DETAILED DESCRIPTION OF THE ILLUSTRATIVE EMBODIMENTS

In wire line logging measurements, permeabilities are derived using empirical correlations established from laboratory measurements of permeability on cores and the characteristic tool response parameters. The primary tools used for this type of analysis are the sonic, electrical conductivity, and nuclear magnetic resonance (NMR) logging tools. For the sonic measurements, the permeability is derived from the attenuation of the elastic wave propagating along the borehole or in the formation. A major complication is that the attenuation is determined by the bulk properties, which includes both the grain and fluid properties. For the conductivity measurements, the permeability is derived using the Kozeny-Carmen relationship. A major complication in this measurement is that the conductivity varies with salinity as well as the relative saturation of hydrocarbons and also depends on the amount and types of clays and minerals present. Current NMR measurements employ a sequence of radio frequency pulses that generate the observable NMR signal, a spin echo. As the spacing of the radio frequency pulses increases, the resulting spin echo signal is attenuated with a characteristic relaxation time. From these NMR spin echo measurements, the permeability is inferred from an assumed simple relation between the distribution of NMR relaxation times and the pore size distribution. However this relationship is complex and the NMR relaxation time spectrum can only be converted to a pore size distribution in ideal circumstances when all relevant parameters such as the surface relaxivity and contributions of the pore-to-pore coupling are known. As a result of the complications in the interpretation of each of these measurements, the inferred permeability can have large uncertainties.

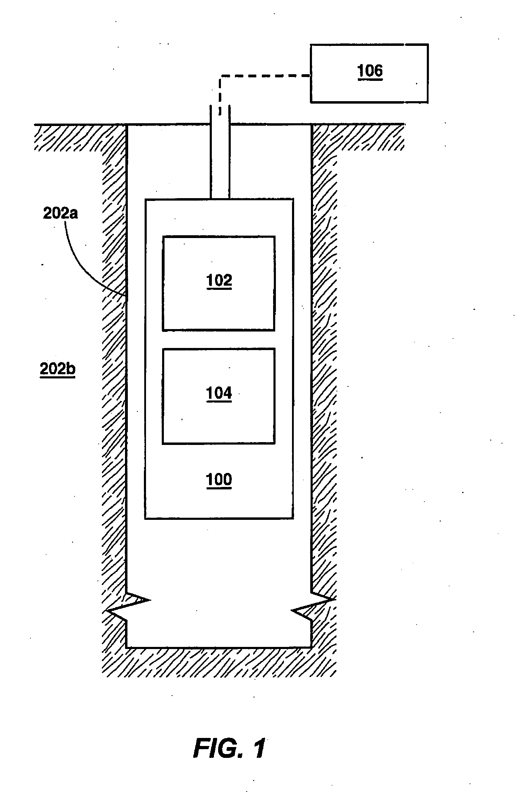

Referring initially to Fig. 1, an exemplary embodiment of a logging tool **100** includes a conventional nuclear magnetic resonance ("NMR") tool **102** and a conventional acoustic transmitter **104**. A controller **106** is operably coupled to the NMR tool **102** and acoustic transmitter **104** for monitoring and controlling the operation of the NMR tool and the acoustic transmitter. The controller **106** may, for example, be a proto-ammable general purpose computer.

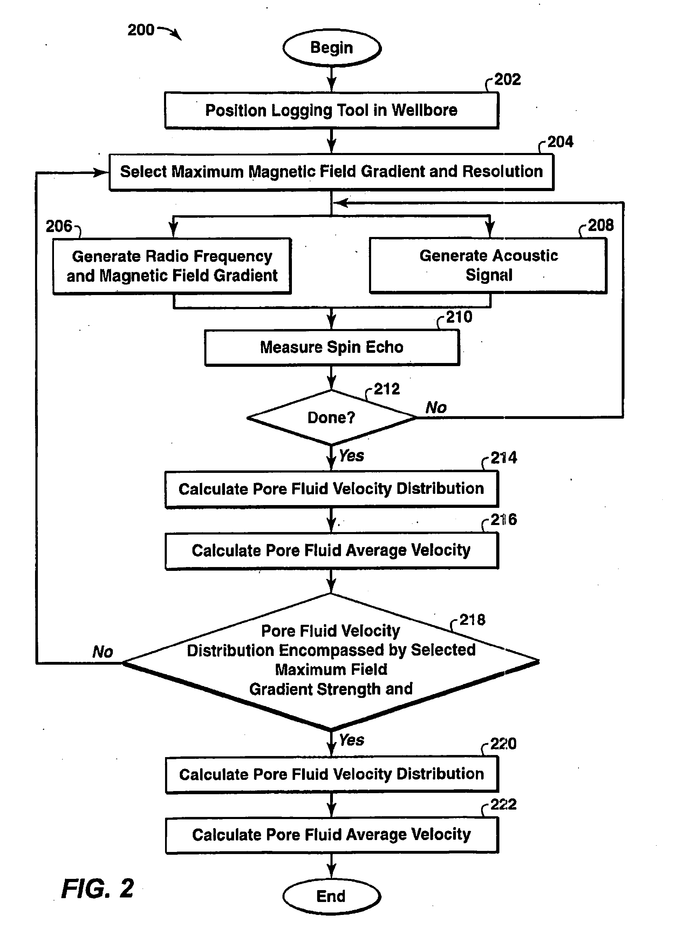

Referring to Figs. 1 and 2, in an exemplary embodiment, the logging tool **100** is operated by implementing a method **200** for determining material properties in which, in **202**, the logging tool **100** is positioned within a wellbore **202a** that traverses a subterranean formation **202b**.

In **204**, the maximum gradient and resolution of the magnetic field generated by the NMR tool **102** of the logging tool **100** is then selected.

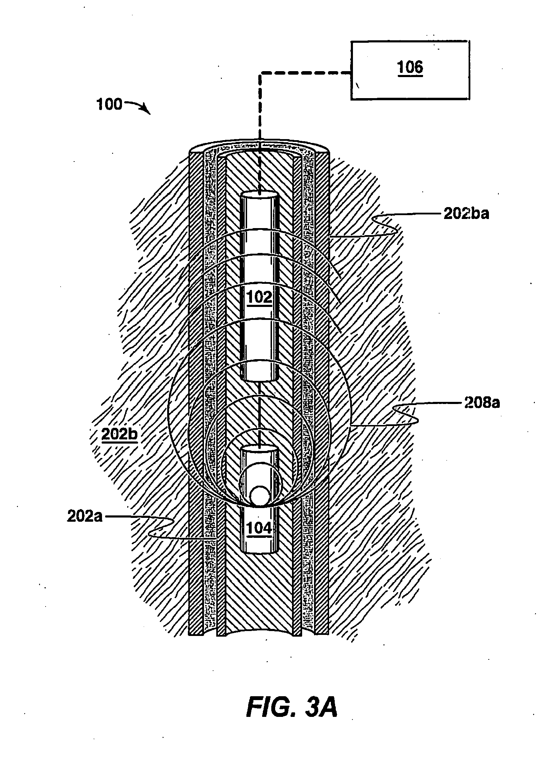

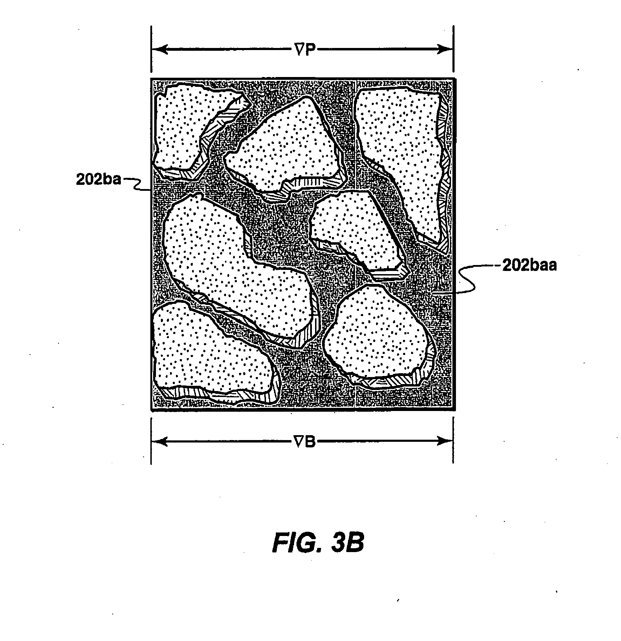

In **206**, as illustrated in Fig. 3A, the NMR tool **201** of the logging tool **100** is operated to generate and transmit a radio frequency signal into, and generate a magnetic field within, a volume **202ba** within the formation **202b**. In **208**, the acoustic transmitter **104** of the logging tool is operated to generate and inject acoustic energy **208a** into the volume **202ba** of the formation **202b**. In an exemplary embodiment, as illustrated in Fig. 3B, the volume **202ba** defines one or more pores **206aa** containing fluidic materials and operation of the logging tool 100 creates a pressure gradient $\Delta P$ and a magnetic field gradient $\Delta B$ within the volume.

In **210**, the NMR tool **102** of the logging tool **100** monitors and records the NMR signal generated within the volume **202ba** of the formation **202b**.

In an exemplary embodiment, **206, 208** and **210** are repeated until a complete set of data is collected in **212**.

In an exemplary embodiment, **206, 208** and **210** are repeated for different values of the magnetic field gradient.

In an exemplary embodiment, **206, 208,** and **210** are repeated using measurements of the spin echo from different physical locations within the formation **202b** by, for example, varying the frequency of the RF signal in **206.**

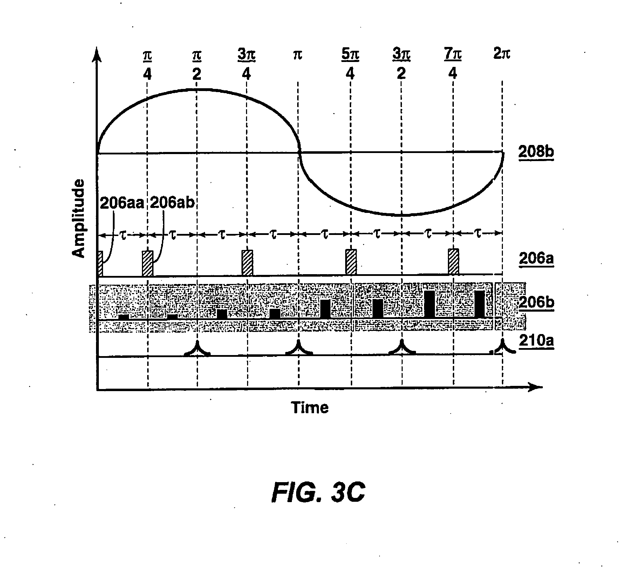

In an exemplary embodiment, as illustrated in Fig. 3C, in **206,** the NMR tool **102** of the logging tool **100** is operated to transmit radio frequency pulses in the form of a Carr-Purcell-Meibom-Gill pulse sequence and magnetic field gradient pulses, **206a** and **206b**, respectively, into the volume **202ba** of the formation **202b**. In an exemplary embodiment, the initial radio frequency pulse **206aa** is spaced from the next radio frequency pulses **206ab** by a time period $\tau$ and the next radio frequency pulses are spaced apart by a time period equal to $2\tau$. In an exemplary embodiment, the magnitudes of pairs of the magnetic field gradient pulses **206b** are the same before and after corresponding next radio frequency pulses **206ab.** In an exemplary embodiment, each subsequent pair of magnetic field gradient pulses **206b** are of increased magnitude from the prior pair of magnetic field gradient pulses.

In an exemplary embodiment, in **208,** the acoustic transmitter **104** of the logging tool **100** is operated to generate and inject an acoustic wave **208b** into the volume **202ba** of the formation **202b**. In an exemplary embodiment in **210,** the NMR tool **102** of the logging tool **100** is operated to monitor and record MNR spin echoes **210a** generated by the Carr-Purcell-Meibom-Gill pulse sequence within the volume **202ba** by the operation of the logging tool.

In an exemplary embodiment, in **214,** the data collected in **206, 208** and **210** is then processed to calculate the pore fluid velocity distribution.

In particular, in an exemplary embodiment, in **214,** the data collected in **206, 208,** and **210** is then processed to calculate the pore fluid velocity distribution function $P(\vec{v})$ within the volume **202ba:**

$$P(\vec{v}) = \frac{1}{2\pi|\vec{\chi}|} \int_{-\infty}^{\infty} e^{i\gamma\vec{G}\cdot\vec{\chi}\cdot\vec{v}} \hat{P}_{NMR}\left(\gamma\vec{G}\cdot\vec{\chi}\right) d\vec{G}\cdot\vec{\chi} \qquad (1)$$

The theoretical basis for the relationship in equation (1) above is as follows.

The acoustic component of the position of a fluid element within the volume **202ba** may be specified by a three dimensional vector $\vec{R}(\vec{v},\omega_a,t)$, where: $\vec{v}$ is the pore fluid velocity vector, $\omega_a$ is the acoustic driving frequency of the acoustic transmitter **104** of the logging tool **100,** and t is time. The dependence of the fluid response on $\omega_a$ will be taken as arbitrary, and can be construed as a zero frequency constant pressure gradient or as a set of frequencies. A set of frequencies are implied if: 1) the acoustic source is comprised of multiple frequencies, or 2) if the fluid dynamics involves nonlinear response to the driving pressure, which actively produces a multiple frequency response in the formation.

The contribution of a single fluid element to the NMR signal obtained in **210** depends on the cumulative position function $\vec{R}_\Sigma$:

$$\vec{R}_\Sigma(\vec{v},\omega_a,\tau) = \int_\tau^{2\tau} \vec{R}(\vec{v},\omega_a,t)\,dt - \int_0^\tau \vec{R}(\vec{v},\omega_a,t)\,dt \qquad (2)$$

where the cumulative position function $\vec{R}_\Sigma$ has units of distance-time; and the parameter $\tau$ is a time delay between the radio frequency pulses generated by the NMR tool **102.**

The cumulative position function $\vec{R}_\Sigma$ enters the spin echo signal through the cumulative phase:

$$\Phi(2\tau) = \gamma\vec{G}\cdot\vec{R}_\Sigma(\vec{v},\omega_a,\tau), \qquad (3)$$

where $\vec{G}$ is a vector that specifies both the magnetic field gradient strength and direction in the volume **2026a,** and $\gamma$ is the nuclear gyromagnetic ratio.

The total component of the transverse magnetization following the Carr-Purcell-Meibom-Gill pulse sequence is an average of the cumulative phase resoling from all fluid elements in the active volume of the gradient:

$$\frac{M(2\tau)}{M(0)} = \left\langle e^{i\Phi(2\tau)} \right\rangle \qquad (4)$$

where the fluid elements are distinguished from each other by their respective pore velocities.

The average on the right hand side of (4) is expressed as:

$$\left\langle e^{i\Phi(2\tau)} \right\rangle = \left\langle e^{i\gamma\vec{G}\cdot\vec{R}_\Sigma(\vec{v},\omega_a,\tau)} \right\rangle = \int_{-\infty}^{\infty} e^{i\gamma\vec{G}\cdot\vec{R}_\Sigma(\vec{v},\omega_a,\tau)} P(\vec{v})\,d\vec{v} \qquad (5)$$

where $P(\vec{v})$ is the three dimensional velocity distribution function, and may implicitly depend upon $\omega_a$; and the number of fluid elements with a given velocity $\vec{v}$ is weighted by $P(\vec{v})$.

If the cumulative position $\vec{R}_\Sigma$ function depends linearly on the velocity in each of the principal spatial directions, then the amplitude of the spin echo signal is the Fourier transform of the velocity distribution function $P(\vec{v})$. Mathematically this situation is expressed as:

$$\vec{R}_\Sigma(\vec{v},\omega_a,\tau) = -\vec{\chi}(\omega_a,\tau)\cdot\vec{v}, \qquad$$

where the coupling term, $\vec{\chi}(\omega_a,\tau)$, is tensoral in its most general form.

$$\left\langle e^{i\gamma\vec{G}\cdot\vec{R}_\Sigma(\vec{v},\omega_a,\tau)} \right\rangle = \int_{-\infty}^{\infty} e^{-i\gamma\vec{G}\cdot\vec{\chi}\cdot\vec{v}} P(\vec{v})\,d\vec{v} = \hat{P}(\gamma\vec{G}\cdot\vec{\chi}) \qquad (6)$$

The right hand side of (6) identifies the NMR signal as the Fourier transform of $P(\vec{v})$. Spin echo measurements, as expressed above in (4), are obtained for a variable set of $\vec{G}$ as depicted, for example in Fig. 3C. The Fourier amplitude for a given value of $\vec{G}$ is identified with the spin echo signal:

$$\hat{P}_{NMR}\left(\gamma\vec{G}\cdot\vec{\chi}\right)=\frac{M\left(2\tau,\vec{G}\right)}{M\left(0\right)}.\qquad(7)$$

In an exemplary embodiment, the spin echo signal from the Carr-Purcell-Meibom-Gill pulse sequence is acquired over a complete range of $\vec{G}$ and is used to construct the velocity distribution function $P(\vec{v})$ by Fourier inversion of (6):

$$P(\vec{v})=\frac{1}{2\pi|\vec{\chi}|}\int_{-\infty}^{\infty}e^{i\gamma\vec{G}\cdot\vec{\chi}\cdot\vec{v}}\,\hat{P}_{NMR}\left(\gamma\vec{G}\cdot\vec{\chi}\right)d\vec{G}\cdot\vec{\chi}\qquad(8)$$

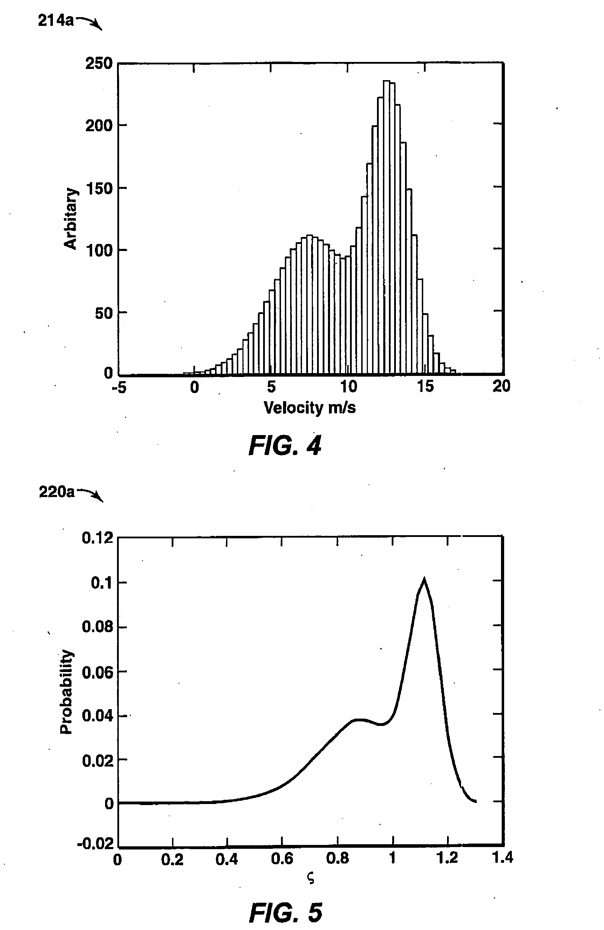

In an exemplary embodiment, as illustrated in Fig. 4, in **214,** a pore fluid velocity distribution **214a** is generated. In an exemplary embodiment, the velocity distribution is bi-modal. In an exemplary embodiment, the fluid displacements are on the same scale or smaller than the average pore size, and $\vec{\chi}(\omega_a,\tau)$ is diagonal. In an exemplary embodiment, $\vec{\chi}(\omega_a,\tau)$ is given by the following equation:

$$\vec{\chi}\left(\omega_a,\tau\right)=-\frac{F\left(\omega_a,\tau,\phi_o\right)}{\omega_a^2}\cdot I\,,$$

where $I$ is identity matrix and $F(\omega_a,\tau,\phi_0)$ is defined by the following equation:

$$F\left(\omega,\tau,\phi_0\right)=\cos\phi_0-2\cos\left(\omega\tau+\phi_0\right)+\cos\left(2\omega\tau+\phi_0\right).$$

In an exemplary embodiment, in **216,** the average pore fluid velocity is then generated from the pore fluid velocity distribution **214a** using conventional methods.

In an exemplary embodiment, in **218,** if the pore fluid velocity distribution is not encompassed by the selected maximum field gradient and resolution, then **204, 206, 208, 210, 212, 214**, and **216** are repeated. If, in **218,** it is determined that the pore fluid velocity distribution is encompassed by the selected maximum field gradient and resolution, then the method **200** proceeds to **220.**

In particular, the maximum gradient strength that is obtainable is one of the physical limitations in the NMR measurement that impacts the resolution of $P(\vec{v})$. Even simple measures of $P(\vec{v})$, like the mean squared deviation, are impacted by the maximum gradient strength. The equation (8) allows the gradient strength to be selected so that the $P(\vec{v})$ information content of the spin echo signal may be maximized.

In particular, the effect of finite gradient strength can be viewed in terms of a filter that acts on the fluid velocity distribution function. From the principles of Fourier analysis, a finite range on $G$ is equivalent to the convolution of $P(v)$ with a sinc function, $Sinc(a, v) = Sin(\alpha.v)/v$.

The effective distribution that is encoded in the spin echo signal is thereby equivalent to:

$$P_{G_m}\left(v,\omega_o\right)=\frac{1}{\pi}\int_{-\infty}^{\infty}Sinc\left(\gamma G_m\cdot\chi\left(\omega_a,\tau\right),y\right)\cdot P\left(v-y\right)dy\qquad(9)$$

where $G_m$ is the maximum value of the gradient.

The distribution (9) is such that as $G_m\rightarrow\infty$, $P(v)$ is recovered from the convolution. The effective width of the sinc function is $4.5/\gamma G.\chi(\omega_a,\tau)$, so that any features in the velocity distribution function with finer structure than this width will not be encoded in the spin echo signal. For maximum resolution, both NMR parameters $\tau$ and $G$ can be optimized within the physical constraints of the experimental setup. In other words, for any finite $G_m$ there is a distribution $P_{Gm}(v)$ that is wider than $P(v)$ and gives the same effective NMR signal when observations are restricted to the range finite range of $G < G_m$. The resolution by which the velocity distribution can be determined is set by $G_m$, and interpreted through equation (9). Thus, in selecting the maximum field gradient and resolution, the above teachings may be initially applied to **204** to select these parameters and later applied in **218** to determine if adjustments should be made.

In an exemplary embodiment, in **220,** the pore size distribution is then calculated as follows:

$$P(\varsigma) = 2\langle v \rangle \varsigma \cdot P_{NMR}\left(\langle v \rangle \cdot \varsigma^2\right) \tag{10}$$

The theoretical basis for the relationship in equation (10) above is as follows.

The fluid velocity in a capillary pore of radius $r$ is given by the Poisseuille law:

$$v_r = -\frac{r^2}{8\eta} \cdot \frac{\Delta P}{l} \tag{11}$$

where $\Delta P$ is the pressure differential, $l$ is the capillary length, and $\eta$ is the fluid viscosity.

Poisseuille flow gives rise to a Darcy law relation when $dP/dz$ is identified with $\Delta P/l$. Performing the statistical average of (11) and comparing with the macroscopic Darcy law gives $k=\phi\langle r^2 \rangle/8$ for the permeability, where $\phi$ is the porosity. The porosity is a structural assumption, because it is the density of capillaries.

The determination of $k$ permits the pore size distribution function to be obtained from the velocity distribution function.

In particular, the average velocity can be used to eliminate the pressure differential in equation (11).

$$v_r = r^2 \cdot \frac{\langle v \rangle}{\langle r^2 \rangle} \tag{12}$$

Furthermore, all moments of velocity are determined with respect to the even moments of the pore radius distribution by (12). For example,

$$\langle v^2 \rangle = \langle r^4 \rangle \cdot \left(\frac{\langle v \rangle}{\langle r^2 \rangle}\right)^2 \tag{13}$$

In addition, an immediate application of (12) is a structural interpretation of the ratio between $\sqrt{\langle \Delta v^2 \rangle}$ and $\langle v \rangle$:

$$\sqrt{\langle \Delta v^2 \rangle} = \beta \langle v \rangle, \tag{14}$$

with

$$\beta = \sqrt{\frac{\langle r^4 \rangle}{\langle r^2 \rangle^2} - 1} = \frac{\sqrt{\langle r^4 \rangle - \langle r^2 \rangle^2}}{\langle r^2 \rangle}. \qquad (15)$$

If the capillaries all posses a single pore radius, $r$, then $\beta = 0$, in agreement with $\langle \Delta v^2 \rangle = 0$.

The pore size radius distribution can be expressed in terms of the reduced radial quantity $\varsigma = r / \sqrt{\langle r^2 \rangle}$ by equation (12), and is expressed as follows:

$$P(\varsigma) = 2\langle v \rangle \varsigma \cdot P_{NMR}\left(\langle v \rangle \cdot \varsigma^2\right) \qquad (16)$$

In an exemplary embodiment, as illustrated in Fig. 5, in **220**, a pore size distribution **220a** is generated from the velocity distribution **214a** in Fig. 4. In an exemplary embodiment, the pore size distribution **220a** is bi-modal.

In an exemplary embodiment, in **222,** the average pore size is then generated from the first moment of the velocity distribution, i.e., the average velocity, and/or the root mean squared velocity using known methods.

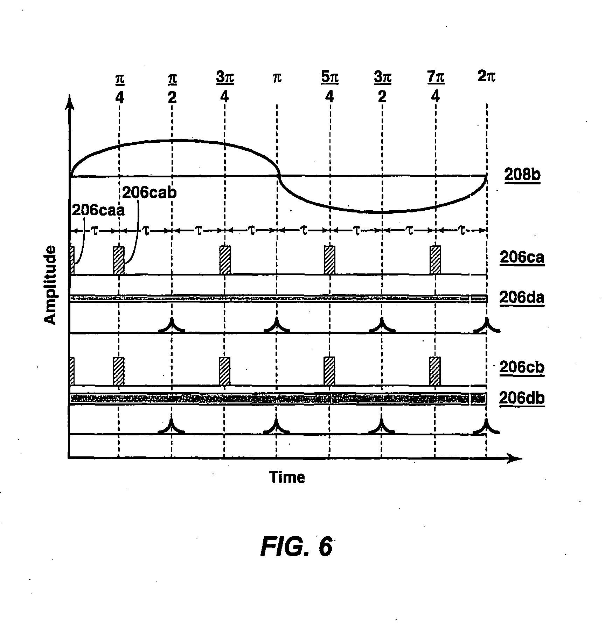

In an exemplary embodiment, as illustrated in Fig. 6, in **206,** the NMR tool **102** of the logging tool **100** is operated to transmit radio frequency pulses, **206ca** and **206cb,** into, and generate and magnetic field gradients, **206da** and **206db,** within, the formation **202b.** In an exemplary embodiment, the frequencies of the radio frequency pulses, **206ca** and **206cb,** are different and the magnitudes of the magnetic field gradients, **206da** and **206db,** are different. In an exemplary embodiment, the initial radio frequency pulses **206caa** are spaced from the next radio frequency pulses **206cab** by a time period $\tau$ and the next radio frequency pulses are spaced apart by a time period equal to $2\tau$. In an exemplary embodiment, the magnetic field gradients, **206da** and **206db,** are generated within different spatial volumes within the formation **202b.**

In an exemplary embodiment, the operating frequencies of the radio frequency pulses and/or the magnetic field gradients may vary as a function of time and or spatial location within the formation **202b.**

In an exemplary embodiment, the operating frequencies of the radio frequency pulses and/or the magnetic field gradients are unique.

In an exemplary embodiment, the spatial direction of the magnetic field gradients and the acoustic waves provided by the logging tool **100** are matched. For example, plane acoustic waves should be applied in the direction of an individual magnetic field gradient.

In an exemplary embodiment, during operation, the logging tool **100** provides a constant magnetic field gradient.

In an exemplary embodiment, in **206, 208,** and **210,** the magnetic field gradient is incrementally varied using a range of gradient strengths and spatial directions.

In an exemplary embodiment, the method **200** permits a direct measurement of fluid flow properties within a pore space within a subterranean formation.

In an exemplary embodiment, the method **200** induces a coherent displacement of fluidic materials within a pore space within a subterranean formation using acoustic energy. In an exemplary embodiment, the coherent displacement of the fluidic materials within the pore space may then be detected and characterized using magnetic field gradient NMR.

In an exemplary embodiment, during the operation of the method 200, acoustic and radio frequency waves are applied simultaneously in the presence of magnetic field gradients using the logging tool **100.**

In an exemplary embodiment, during the operation of the method **200,** the spin echo signals are timed with respect to the application of the acoustic waves and magnetic field gradients to the formation.

In an exemplary embodiment, during the operation of the method **200,** the range of magnetic field gradient strengths and orientations is selected by the desired resolution of the velocity distribution.

In an exemplary embodiment, during the operation of the method **200,** the pore size distribution is determined from the pore fluid velocity distribution.

A method of determining material properties within a portion of a subterranean formation has been described that includes injecting acoustic energy into the portion of the formation; generating a magnetic field gradient within the portion of the formation; injecting a radio frequency energy into the portion of the formation; measuring a spin echo signal from the portion of the formation; and processing the spin echo signal to determine one or more of the material properties of the portion of the subterranean formation; wherein the injecting of acoustic energy, the generating of the magnetic field, and the injecting of the radio frequency energy are performed simultaneously. In an exemplary embodiment, the magnetic field gradient is variable. In an exemplary embodiment, the magnetic field gradient varies with time. In an exemplary embodiment, the magnetic field gradient varies with spatial location. In an exemplary embodiment, the magnetic field gradient varies as a function of the desired resolution of the material properties. In an exemplary embodiment, the material properties comprise a pore fluid velocity distribution. In an exemplary embodiment, the method further comprises determining a pore size distribution from the pore fluid velocity distribution. In an exemplary embodiment, the material properties comprise an average pore fluid velocity. In an exemplary embodiment, the material properties comprise a pore size distribution. In an exemplary embodiment, the material properties comprise an average pore size. In an exemplary embodiment, the method further comprises performing a Fourier inversion of the spin echo signal to determine one or more of the material properties of the formation. In an exemplary embodiment, the acoustic energy comprises a periodic acoustic signal. In an exemplary embodiment, the periodic acoustic signal comprises a plurality of operating frequencies. In an exemplary embodiment, the magnetic field gradient comprises a plurality of operating frequencies. In an exemplary embodiment, the radio frequency energy comprises a plurality of operating frequencies. In an exemplary embodiment, a direction of the magnetic field gradient is substantially the same as a direction of propagation of the acoustic energy.

A method of determining material properties within a portion of a subterranean formation has been described that includes injecting a periodic acoustic signal into the portion of the formation; generating a magnetic field gradient within the portion of the formation; injecting radio frequency energy into the portion of the formation; measuring a spin echo signal from the portion of the formation; and processing the spin echo signal to determine one or more of the material properties of the portion of the subterranean formation buy courier inversion of the spin echo signal; wherein the injecting of acoustic energy, the generating of the magnetic field, and the injecting of the radio frequency energy are performed simultaneously; wherein the material properties comprise a pore fluid velocity distribution and a pore size distribution; and wherein a direction of the magnetic field gradient is substantially the same as a direction of propagation of the acoustic energy.

A system for determining material properties within a portion of a subterranean formation has been described that includes means for injecting acoustic energy into the portion of the formation; means for generating a magnetic field gradient within the portion of the formation; means for injecting a radio frequency energy into the portion of the formation; means for measuring a spin echo signal from the portion of the formation; and means for processing the spin echo signal to determine one or more of the material properties of the portion of the subterranean formation; wherein the injecting of acoustic energy, the generating of the magnetic field, and the injecting of the radio frequency energy are performed simultaneously. In an exemplary embodiment, the magnetic field gradient is variable. In an exemplary embodiment, the magnetic field gradient varies with time. In an exemplary embodiment, the magnetic field gradient varies with spatial location. In an exemplary embodiment, the magnetic field gradient varies as a function of the desired resolution of the material properties. In an exemplary embodiment, the material properties comprise a pore fluid velocity distribution. In an exemplary embodiment, the system further comprises means for determining a pore size distribution from the pore fluid velocity distribution. In an exemplary embodiment, the material properties comprise an average pore fluid velocity. In an exemplary embodiment, the material properties comprise a pore size distribution. In an exemplary embodiment, the material properties comprise an average pore size. In an exemplary embodiment, the system further comprises means for performing a Fourier inversion of the spin echo signal to determine one or more of the material properties of the formation. In an exemplary embodiment, the acoustic energy comprises a periodic acoustic signal. In an exemplary embodiment, the periodic acoustic signal comprises a plurality of operating frequencies. In an exemplary embodiment, the magnetic field gradient comprises a plurality of operating frequencies. In an exemplary embodiment, the radio frequency energy comprises a plurality of operating frequencies. In an exemplary embodiment, a direction of the magnetic field gradient is substantially the same as a direction of propagation of the acoustic energy.

A system for determining material properties within a portion of a subterranean formation has been described that includes means for injecting a periodic acoustic signal into the portion of the formation; means for generating a magnetic field gradient within the portion of the formation; means for injecting radio frequency energy into the portion of the formation; means for measuring a spin echo signal from the portion of the formation; and means for processing the spin echo signal to determine one or more of the material properties of the portion of the subterranean formation by Fourier inversion of the spin echo signal; wherein the injecting of acoustic energy, the generating of the magnetic field, and the injecting of the radio frequency energy are performed simultaneously; wherein the material properties comprise a pore fluid velocity distribution and a pore size distribution; and wherein a direction of the magnetic field gradient is substantially the same as a direction of propagation of the acoustic energy.

A system for determining material properties within a portion of a subterranean formation has been described that includes a source of acoustic energy; a source of magnetic energy; a source of radio frequency energy; a sensor of spin echo signals; and a controller operably coupled to the source of acoustic energy, the source of magnetic energy, the source of radio frequency energy, and the sensor of spin echo signals; wherein the controller is adapted to measure spin echo signals, process spin echo signals to determine one or more of the material properties of the portion of the subterranean formation, and inject acoustic energy, magnetic energy, and radio frequency energy simultaneously into the formation using the source of acoustic energy, the source of magnetic energy, and the source of radio frequency energy, In an exemplary embodiment, the magnetic energy is variable. In an exemplary embodiment, the magnetic energy varies with time. In an exemplary embodiment, the magnetic energy varies with spatial location. In an exemplary embodiment, the magnetic energy varies as a function of the desired resolution of the material properties. In an exemplary embodiment, the material properties comprise a pore fluid velocity distribution. In an exemplary embodiment, the material properties comprise a pore size distribution. In an exemplary embodiment, the material properties comprise an average pore fluid velocity. In an exemplary embodiment, the material properties comprise a pore size distribution. In an exemplary embodiment, the material properties comprise an average pore size. In an exemplary embodiment, the controller is further adapted to perform a Fourier inversion of the spin echo signal to determine one or more of the material properties of the formation. In an exemplary embodiment, the acoustic energy comprises a periodic acoustic signal. In an exemplary embodiment, the periodic acoustic signal comprises a plurality of operating frequencies. In an exemplary embodiment, the magnetic energy comprises a plurality of operating frequencies. In an exemplary embodiment, the radio frequency energy comprises a plurality of operating frequencies. In an exemplary embodiment, the magnetic energy is substantially the same as a direction of propagation of the acoustic energy.

A system for determining material properties within a portion of a subterranean formation has been described that includes a source of acoustic energy; a source of magnetic energy; a source of radio frequency energy; a sensor of spin echo signals; and a controller operably coupled to the source of acoustic energy, the source of magnetic energy, the source of radio frequency energy, and the sensor of spin echo signals; wherein the controller is adapted to measure spin echo signals, process spin echo signals to determine one or more of the material properties of the portion of the subterranean formation, and inject acoustic energy, magnetic energy, and radio frequency energy simultaneously into the formation using the source of acoustic energy, the source of magnetic energy, and the source of radio frequency energy; wherein the material properties comprise a pore fluid velocity distribution and a pore size distribution; and wherein a direction of the magnetic energy is substantially the same as a direction of propagation of the acoustic energy.

It is understood that variations may be made in the foregoing without departing from the scope of the invention. For example, the teachings of the present illustrative embodiments may be used to provide a wellbore casing, a pipeline, or a structural support. Furthermore, the elements and teachings of the various illustrative embodiments may be combined in whole or in part in some or all of the illustrative embodiments. In addition, one or more of the elements and teachings of the various illustrative embodiments may be omitted, at least in part, and/or combined, at least in part, with one or more of the other elements and teachings of the various illustrative embodiments.

Although illustrative embodiments of the invention have been shown and described, a wide range of modification, changes and substitution is contemplated in the foregoing disclosure. In some instances, some features of the present invention may be employed without a corresponding use of the other features. Accordingly, it is appropriate that the appended claims be construed broadly and in a manner consistent with the scope of the invention.

## Claims

1. A method of determining material properties within a portion of a subterranean formation, comprising:

   a) injecting acoustic energy into the portion of the formation;
   b) generating a magnetic field gradient within the portion of the formation;
   c) injecting a radio frequency energy into the portion of the formation;
   wherein the acoustic energy, the magnetic field gradient, and radio frequency energy have a predetermined relationship in time;
   d) measuring an NMR signal from the portion of the formation;
   e) repeating a), b), c), and d) for one or more different values of the magnetic field gradient; and
   f) processing the measured NMR signals to determine one or more of the material properties of the portion of the subterranean formation.

2. The method of claim 1, wherein the measured NMR signal detected comprises a spin echo.

3. The method of claim 1, wherein the magnetic field gradient is variable, varies with time, varies with spatial location, or varies as a function of the desired resolution of the material properties.

4. The method of claim 1, wherein the material properties are selected from the group consisting of a pore fluid velocity distribution, an average pore fluid velocity, absolute pore size, mean pore size, and a relative pore size distribution.

**5.** The method of claim 4, further comprising:

performing a Fourier inversion of the measured NMR signal to determined one or more of the material properties of the formation.

**6.** The method of claim 1, wherein the acoustic energy comprises a periodic acoustic signal.

**7.** The method of claim 1, wherein the periodic acoustic signal, magnetic field gradient, or radio frequency energy comprises a plurality of operating frequencies.

**8.** The method of claim 1, wherein a direction of the magnetic field gradient is substantially the same as a direction of propagation of the acoustic energy.

**9.** The method of claim 1 wherein the spatial direction of the magnetic field gradient is not the same as the direction of the propagating wave of the acoustic energy.

**10.** A method of producing hydrocarbons from a subterranean formation, comprising:

a) injecting acoustic energy into the portion of the formation;
b) generating a magnetic field gradient within the portion of the formation;
c) injecting a radio frequency energy into the portion of the formation;
wherein the acoustic energy, the magnetic field gradient, and radio frequency energy have a predetermined relationship in time;
d) measuring an NMR signal from the portion of the formation;
e) repeating a), b), c), and d) for one or more different values of the magnetic field gradient;
f) processing the measured NMR signals to determine one or more of the material properties of the subterranean formation; and
g) producing hydrocarbons from the subterranean formation as a function of the determined material properties of the formation.

**11.** The method of claim 10, wherein the material properties comprise a pore fluid velocity distribution; and wherein the method further comprises:

performing a Fourier inversion of the measured NMR signals to determine one or more of the material properties of the formation.

**12.** The method of claim 1, wherein the predetermined relationship in time is that the acoustic energy, the magnetic field gradient, and radio frequency energy occur simultaneously at each measurement location.

**13.** The method of claim 1, wherein the material properties include fluid flow properties, and further comprising using the fluid flow properties to assess the economics of the subterranean formation or for planning development of hydrocarbon production from the subterranean formation.

**FIG. 1**

200 ⌐↘

**Begin**

⌐202
**Position Logging Tool in Wellbore**

⌐204
**Select Maximum Magnetic Field Gradient and Resolution**

206⌐
**Generate Radio Frequency and Magnetic Field Gradient**

⌐208
**Generate Acoustic Signal**

⌐210
**Measure Spin Echo**

⌐212
**Done?**  *No*

*Yes*  ⌐214
**Calculate Pore Fluid Velocity Distribution**

⌐216
**Calculate Pore Fluid Average Velocity**

⌐218
**Pore Fluid Velocity Distribution Encompassed by Selected Maximum Field Gradient Strength and**

*No*

*Yes*  ⌐220
**Calculate Pore Fluid Velocity Distribution**

⌐222
**Calculate Pore Fluid Average Velocity**

**End**

*FIG. 2*

FIG. 3A

**FIG. 3B**

FIG. 3C

214a

**FIG. 4**

220a

**FIG. 5**

**FIG. 6**

**EP 2 096 468 A1**

**European Patent Office**

**EUROPEAN SEARCH REPORT**

Application Number

EP 08 00 3559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/007109 A1 (THOMANN HANS [US] ET AL) 13 January 2005 (2005-01-13)<br>* abstract *<br>* figures 1,4 *<br>* paragraph [0007] - paragraph [0008] *<br>* paragraphs [0012], [0015] *<br>* paragraphs [0017], [0018] *<br>* paragraphs [0050], [0078] *<br>----- | 1-13 | INV.<br>G01V3/32 |
| Y | GB 2 279 754 A (EXXON RESEARCH ENGINEERING CO [US]) 11 January 1995 (1995-01-11)<br>* abstract *<br>* figures 1,2 *<br>* page 1, paragraph 1 *<br>* page 2, lines 7-12 *<br>* page 3, paragraph 2-4 *<br>* page 4, paragraphs 3,4 *<br>* page 9, lines 14-29 *<br>* page 11, paragraph 3 *<br>----- | 1-13 | |
| A | US 2005/270023 A1 (FREEDMAN ROBERT [US]) 8 December 2005 (2005-12-08)<br>* abstract *<br>* figures 4,5 *<br>* paragraph [0002] *<br>* paragraphs [0013], [0014] *<br>* paragraphs [0019] - [0021] *<br>* paragraphs [0032] - [0037] *<br>----- | 1-5 | TECHNICAL FIELDS SEARCHED (IPC)<br><br>G01V |
| A | LOOYESTIJN ET AL: "Permeability determination through NMR detection of acoustically induced fluid oscillation" MAGNETIC RESONANCE IMAGING, TARRYTOWN, NY, US,<br>vol. 24, no. 9,<br>27 October 2006 (2006-10-27), pages 1187-1201, XP005846960<br>ISSN: 0730-725X<br>-----<br>-/-- | 1,6,10 | |

The present search report has been drawn up for all claims

| Place of search | Date of completion of the search | Examiner |
|---|---|---|
| The Hague | 6 August 2008 | Meyer, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 08 00 3559

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/214287 A1 (SUN BOQIN [US] ET AL) 20 November 2003 (2003-11-20) * abstract * * paragraphs [0002], [0005] * ----- | 4 | |
| A | US 6 121 773 A (TAICHER GERSH ZVI [US] ET AL) 19 September 2000 (2000-09-19) * abstract * * column 12, lines 35-42 * ----- | 7 | |
| A | US 4 291 271 A (LAUFFER DONALD E) 22 September 1981 (1981-09-22) ----- | 4 | |

TECHNICAL FIELDS SEARCHED (IPC)

The present search report has been drawn up for all claims

| Place of search | Date of completion of the search | Examiner |
|---|---|---|
| The Hague | 6 August 2008 | Meyer, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 00 3559

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2008

| Patent document cited in search report | | Publication date | Patent family member(s) | | Publication date |
|---|---|---|---|---|---|
| US 2005007109 | A1 | 13-01-2005 | AU | 2004258093 A1 | 27-01-2005 |
| | | | CA | 2531072 A1 | 27-01-2005 |
| | | | EP | 1651930 A2 | 03-05-2006 |
| | | | MX | PA05013787 A | 13-03-2006 |
| | | | WO | 2005008187 A2 | 27-01-2005 |
| GB 2279754 | A | 11-01-1995 | AU | 670377 B2 | 11-07-1996 |
| | | | AU | 6609194 A | 12-01-1995 |
| | | | BR | 9402600 A | 04-04-1995 |
| | | | CA | 2125901 A1 | 02-01-1995 |
| | | | MX | 9404625 A1 | 31-01-1995 |
| | | | NO | 942402 A | 02-01-1995 |
| | | | US | 5428291 A | 27-06-1995 |
| US 2005270023 | A1 | 08-12-2005 | CA | 2505293 A1 | 04-12-2005 |
| | | | CN | 1707290 A | 14-12-2005 |
| | | | DE | 102005024628 A1 | 29-12-2005 |
| | | | FR | 2871235 A1 | 09-12-2005 |
| | | | GB | 2414807 A | 07-12-2005 |
| US 2003214287 | A1 | 20-11-2003 | NONE | | |
| US 6121773 | A | 19-09-2000 | NONE | | |
| US 4291271 | A | 22-09-1981 | NONE | | |

EPO FORM P0459